(19) **Europäisches Patentamt / European Patent Office / Office européen des brevets**

(11) **EP 4 773 220 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
$H01M\ 4/139$ (2010.01)   $H01G\ 11/38$ (2013.01)
$H01M\ 4/13$ (2010.01)   $H01M\ 4/62$ (2006.01)

(21) Application number: 24859714.8

(22) Date of filing: 26.08.2024

(52) Cooperative Patent Classification (CPC):
H01G 11/38; H01M 4/13; H01M 4/139; H01M 4/62;
Y02E 60/10

(86) International application number:
PCT/JP2024/030318

(87) International publication number:
WO 2025/047681 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.08.2023 JP 2023140449

(71) Applicant: Zeon Corporation
Tokyo 100-8246 (JP)

(72) Inventors:
• KITAZAWA, Yuzo
  Tokyo 100-8246 (JP)
• ASAI, Kazuki
  Tokyo 100-8246 (JP)

(74) Representative: Maiwald GmbH
Elisenhof
Elisenstraße 3
80335 München (DE)

(54) **DISPERSANT COMPOSITION FOR ELECTROCHEMICAL ELEMENT, CONDUCTOR DISPERSION FOR ELECTROCHEMICAL ELEMENT, SLURRY FOR ELECTROCHEMICAL ELEMENT ELECTRODE, ELECTRODE FOR ELECTROCHEMICAL ELEMENT, AND ELECTROCHEMICAL ELEMENT**

(57)   Provided is a dispersant composition for an electrochemical device with which it is possible to form an electrode for an electrochemical device that can reduce IV resistance of an electrochemical device. The dispersant composition for an electrochemical device contains a polymer A that includes a nitrile group-containing monomer unit and an alkylene structural unit having a carbon number of 4 or more. When the weight-average molecular weight of the polymer A is taken to be $M_A$ and the viscosity measured at a temperature of 25°C for a polymer solution obtained by adding N-methyl-2-pyrrolidone to the polymer A such that the concentration of the polymer A is 10 mass% is taken to be $\eta_A$ (mPa·s), a value $F_A$ calculated by $F_A = (\eta_A/M_A) \times 1,000$ is not less than 0.1 and not more than 9.0. When the transverse relaxation time measured at a temperature of 25°C for N-methyl-2-pyrrolidone is taken to be $T2_S$ (ms) and the transverse relaxation time measured at a temperature of 25°C for a polymer solution obtained by adding N-methyl-2-pyrrolidone to the polymer A such that the concentration of the polymer A is 1 mass% is taken to be T2c (ms), a T2 ratio calculated by T2 ratio = $T2_S/T2_C$ is not less than 1.1 and not more than 1.8.

## Description

TECHNICAL FIELD

The present disclosure relates to a dispersant composition for an electrochemical device, a conductive material dispersion liquid for an electrochemical device, a slurry for an electrochemical device electrode, an electrode for an electrochemical device, and an electrochemical device.

BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide range of applications.

An electrode used in an electrochemical device such as a lithium ion secondary battery normally includes a current collector and an electrode mixed material layer formed on the current collector. The electrode mixed material layer is formed, for example, through application and drying, on the current collector, of a slurry composition (hereinafter, also referred to as a "slurry for an electrochemical device electrode" or simply as a "slurry for an electrode") in which an electrode active material, a conductive material such as CNTs, and a polymer having a function as a dispersant are dispersed in a solvent.

In recent years, attempts have been made to improve a dispersant composition for an electrochemical device (hereinafter, also referred to simply as a "dispersant composition") and a conductive material dispersion liquid for an electrochemical device (hereinafter, also referred to simply as a "conductive material dispersion liquid") that may be used in the production of a slurry for an electrode in order to achieve further improvement of electrochemical device performance.

As one specific example, Patent Literature (PTL) 1 discloses a conductive material dispersion liquid that contains carbon nanotubes having a specific surface area and a volume-average particle diameter within specific ranges, a hydrogenated acrylonitrile-butadiene copolymer having a weight-average molecular weight of not more than a specific value, and a solvent. According to PTL 1, this conductive material dispersion liquid can cause a secondary battery to display excellent output characteristics and cycle characteristics.

As another example, PTL 2 discloses a conductive material dispersion liquid that contains bundle-type carbon nanotubes, hydrogenated nitrile rubber, and a dispersion medium and that has a complex modulus within a specific range. According to PTL 2, this conductive material dispersion liquid has excellent dispersibility and low powder resistance characteristics, which make it useful in production of an electrode for high output.

CITATION LIST

Patent Literature

PTL 1: WO2022/070736A1
PTL 2: JP2018-533175A

SUMMARY

(Technical Problem)

However, there is room for further improvement of the conventional conductive material dispersion liquids described above in terms of reducing IV resistance of an electrochemical device such as a secondary battery.

Accordingly, one object of the present disclosure is to provide a dispersant composition for an electrochemical device, a conductive material dispersion liquid for an electrochemical device, and a slurry for an electrochemical device electrode with which it is possible to form an electrode for an electrochemical device that can reduce IV resistance of an electrochemical device.

Another object of the present disclosure is to provide an electrode for an electrochemical device that can reduce IV resistance of an electrochemical device.

Yet another object of the present disclosure is to provide an electrochemical device having low IV resistance.

(Solution to Problem)

The inventors conducted diligent investigation with the aim of solving the problem set forth above. The inventors discovered that it is possible to reduce IV resistance of an electrochemical device by using a dispersant composition that contains a polymer A including a nitrile group-containing monomer unit and an alkylene structural unit having a carbon number of 4 or more, wherein the weight-average molecular weight of the polymer A and the viscosity of an N-methyl-2-pyrrolidone (NMP) solution of the polymer A under specific conditions satisfy a specific relationship, and a ratio of the transverse relaxation time of NMP and the transverse relaxation time of an NMP solution of the polymer A under specific conditions is within a specific range. In this manner, the inventors completed the present disclosure.

Specifically, the present disclosure aims to advantageously solve the problem set forth above, and, according to the present disclosure, dispersant compositions for an electrochemical device according to the following {1} to {5}, conductive material dispersion liquids for an electrochemical device according to the following {6} to {8}, a slurry for an electrochemical device electrode according to the following {9}, an electrode for an electrochemical device according to the following {10}, and an electrochemical device according to the following {11} are provided.

{1} A dispersant composition for an electrochemical device comprising a polymer A, wherein the polymer A includes a nitrile group-containing monomer unit and an alkylene structural unit having a carbon number of 4 or more, when a weight-average molecular weight of the polymer A is taken to be $M_A$ and a viscosity measured at a temperature of 25°C for a polymer solution obtained by adding N-methyl-2-pyrrolidone to the polymer A such that a concentration of the polymer A is 10 mass% is taken to be $\eta_A$, in units of mPa·s, a value $F_A$ calculated by formula (1), shown below:

$$F_A = (\eta_A/M_A) \times 1{,}000 \cdots (1)$$

is not less than 0.1 and not more than 9.0, and when a transverse relaxation time measured at a temperature of 25°C for N-methyl-2-pyrrolidone is taken to be T2s, in units of milliseconds, and a transverse relaxation time measured at a temperature of 25°C for a polymer solution obtained by adding N-methyl-2-pyrrolidone to the polymer A such that a concentration of the polymer A is 1 mass% is taken to be T2c, in units of milliseconds, a T2 ratio calculated by formula (2), shown below:

$$T2\text{ ratio} = T2s/T2c \cdots (2)$$

is not less than 1.1 and not more than 1.8.

By using a dispersant composition containing a polymer A that includes a nitrile group-containing monomer unit and an alkylene structural unit having a carbon number of 4 or more and that gives values of "$F_A$" and "T2 ratio" that are within the ranges set forth above, it is possible to obtain an electrochemical device having low IV resistance.

Note that a "monomer unit" of a polymer referred to in the present disclosure means a "repeating unit derived from the monomer that is included in a polymer obtained using that monomer".

Also note that the "transverse relaxation time" referred to in the present disclosure indicates the transverse relaxation time measured by $^1$H-nuclear magnetic resonance ($^1$H-NMR), which is also referred to as the "spin-spin relaxation time".

Moreover, the "weight-average molecular weight ($M_A$)", "viscosity ($\eta_A$)", "transverse relaxation time (T2s)", and "transverse relaxation time (T2c)" referred to in the present disclosure can be measured by methods described in the EXAMPLES section of the present specification.

Furthermore, "$F_A$" and "T2 ratio" referred to in the present disclosure can, more specifically, be calculated by methods described in the EXAMPLES section of the present specification.

{2} The dispersant composition for an electrochemical device according to the foregoing {1}, wherein the nitrile group-containing monomer unit is an acrylonitrile unit and the alkylene structural unit is a hydrogenated 1,3-butadiene unit.

By using a polymer A that includes an acrylonitrile unit and a hydrogenated 1,3-butadiene unit, it is possible to further reduce IV resistance of an electrochemical device.

{3} The dispersant composition for an electrochemical device according to the foregoing {1} or {2}, wherein the polymer A further includes either or both of an aromatic vinyl monomer unit and an acid group-containing monomer unit.

By using a polymer A that further includes either or both of an aromatic vinyl monomer unit and an acid group-containing monomer unit, it is possible to further reduce IV resistance of an electrochemical device.

{4} The dispersant composition for an electrochemical device according to any one of the foregoing {1} to {3}, wherein the polymer A has an iodine value of not less than 5 mg/100 mg and not more than 60 mg/100 mg, and the polymer A has a weight-average molecular weight ($M_A$) of not less than 1,000 and not more than 100,000.

When the iodine value and weight-average molecular weight of the polymer A are within the ranges set forth above, dispersibility of carbon nanotubes (hereinafter, also abbreviated as "CNTs") in a conductive material dispersion liquid improves, and IV resistance of an electrochemical device can be further reduced while also enhancing rate characteristics of the electrochemical device. Moreover, good oxidation resistance of the polymer A can be ensured, and elution of the polymer A into electrolyte solution can be inhibited.

Note that the "iodine value" of the polymer A referred to in the present disclosure can be measured by a method described in the EXAMPLES section of the present specification.

{5} The dispersant composition for an electrochemical device according to any one of the foregoing {1} to {4}, further comprising a solvent.

{6} A conductive material dispersion liquid for an electrochemical device comprising: the dispersant composition for an electrochemical device according to any one of the foregoing {1} to {5}; a conductive material; and a solvent, wherein the conductive material includes one or more carbon nanotubes.

By using a conductive material dispersion liquid that contains at least any one of the dispersant compositions set forth above, a conductive material that includes CNTs, and a solvent, it is possible to obtain an electrochemical device having low IV resistance.

{7} The conductive material dispersion liquid for an electrochemical device according to the foregoing {6}, wherein the conductive material dispersion liquid for an electrochemical device has a solid content concentration of not less than 0.1 mass% and not more than 15 mass%.

When the solid content concentration of the conductive material dispersion liquid is within the range set forth above, rate characteristics of an electrochemical device can be enhanced. Moreover, coatability of a slurry for an electrode that is produced using the conductive material dispersion liquid can be improved.

{8} The conductive material dispersion liquid for an electrochemical device according to the foregoing {6} or {7}, wherein proportional content of the carbon nanotubes is not less than 0.05 mass% and not more than 10 mass%, and proportional content of the polymer A is not less than 0.02 mass% and not more than 8 mass%.

When the proportional contents of the CNTs and the polymer A are within the ranges set forth above, dispersibility of the CNTs in the conductive material dispersion liquid improves, and IV resistance of an electrochemical device can be further reduced while also enhancing rate characteristics of the electrochemical device.

{9} A slurry for an electrochemical device electrode comprising: the conductive material dispersion liquid for an electrochemical device according to any one of the foregoing {6} to {8}; and an electrode active material.

Through a slurry for an electrode that has been produced using any one of the conductive material dispersion liquids set forth above, it is possible to obtain an electrochemical device having low IV resistance.

{10} An electrode for an electrochemical device comprising an electrode mixed material layer formed using the slurry for an electrochemical device electrode according to the foregoing {9}.

Through an electrode that includes an electrode mixed material layer formed using the slurry for an electrode set forth above, it is possible to obtain an electrochemical device having low IV resistance.

{11} An electrochemical device comprising the electrode for an electrochemical device according to the foregoing {10}.

An electrochemical device that includes the electrode for an electrochemical device set forth above has reduced IV resistance.

(Advantageous Effect)

According to the present disclosure, it is possible to provide a dispersant composition for an electrochemical device, a conductive material dispersion liquid for an electrochemical device, and a slurry for an electrochemical device electrode with which it is possible to form an electrode for an electrochemical device that can reduce IV resistance of an electrochemical device.

Moreover, according to the present disclosure, it is possible to provide an electrode for an electrochemical device that can reduce IV resistance of an electrochemical device.

Furthermore, according to the present disclosure, it is possible to provide an electrochemical device that has low IV resistance.

DETAILED DESCRIPTION

The following provides a detailed description of embodiments of the present disclosure.

A presently disclosed dispersant composition for an electrochemical device can be used in production of a presently disclosed conductive material dispersion liquid for an electrochemical device. Moreover, the presently disclosed conductive material dispersion liquid for an electrochemical device can be used in production of a presently disclosed slurry for an electrochemical device electrode. Furthermore, the presently disclosed slurry for an electrochemical device electrode that is produced using the presently disclosed conductive material dispersion liquid for an electrochemical device can be used in formation of an electrode of an electrochemical device such as a lithium ion secondary battery. Also, a presently disclosed electrochemical device includes an electrode for an electrochemical device that has been formed using the presently disclosed slurry for an electrochemical device electrode.

Note that the presently disclosed dispersant composition for an electrochemical device, conductive material dispersion liquid for an electrochemical device, and slurry for an electrochemical device electrode can particularly suitably be used in production of a positive electrode of an electrochemical device.

(Dispersant composition for electrochemical device)

The presently disclosed dispersant composition is used in production of a conductive material dispersion liquid containing CNTs, contains at least a specific polymer A that is described in detail below, and optionally further contains a solvent. No specific limitations are placed on components other than the polymer A and the solvent that may be contained in the dispersant composition, and examples of such components include other components that are described further below. Note that the presently disclosed dispersant composition normally does not contain a conductive material and an electrode active material and that the proportion constituted by the polymer A among all solid content contained in the dispersant composition can be set as 90 mass% or more, or can be set as 95 mass% or more, for example. Moreover, the solid content concentration of the dispersant composition can be set as not less than 5 mass% and not more than 20 mass%, for example.

Features of the presently disclosed dispersant composition are that a value of $F_A$ calculated by the following formula (1) and a T2 ratio calculated by the following formula (2) are within specific ranges.

$$F_A = (\eta_A / M_A) \times 1,000 \cdots (1)$$

[In formula (1), $M_A$ is the weight-average molecular weight of the polymer A and $\eta_A$ is the viscosity (mPa·s) measured at a temperature of 25°C for a polymer solution obtained by adding N-methyl-2-pyrrolidone to the polymer A such that the concentration of the polymer A is 10 mass%.]

$$T2 \text{ ratio} = T2_S / T2_C \cdots (2)$$

[In formula (2), T2s is the transverse relaxation time (ms) measured at a temperature of 25°C for N-methyl-2-pyrrolidone and T2c is the transverse relaxation time (ms) measured at a temperature of 25°C for a polymer solution obtained by adding N-methyl-2-pyrrolidone to the polymer A such that the concentration of the polymer A is 1 mass%.]

As a result of the presently disclosed dispersant composition containing the polymer A including a nitrile group-containing monomer unit and an alkylene structural unit having a carbon number of 4 or more and as a result of "$F_A$" and "T2 ratio" being within the ranges set forth above, it is possible to reduce IV resistance of an electrochemical device using this dispersant composition. Although it is not certain why the above-described effect is obtained by using the presently disclosed dispersant composition set forth above, the reason for this is presumed to be as follows.

In a CNT mixture prior to dispersing treatment, CNTs readily form bundle-like aggregates (CNT aggregates) through Van der Waals forces. The production of a conductive material dispersion liquid in which CNTs are dispersed well is thought to be possible through a step of causing a polymer serving as a dispersant and a solvent to permeate into CNT aggregates, a step of disintegrating the CNT aggregates, and a step of stabilizing the CNTs in a dispersed state in the solvent, for example. The inventors decided to focus on the first step among these steps (i.e., a step of causing a polymer serving as a dispersant and a solvent to permeate into CNT aggregates).

Firstly, the presently disclosed dispersant composition has a value of not less than 0.1 and not more than 9.0 for $F_A$. $F_A$ is a value determined by multiplying $\eta_A / M_A$ by 1,000 as indicated in formula (1), where $\eta_A$ is the viscosity of an NMP solution of the polymer A (polymer A concentration: 10 mass%) and $M_A$ is the weight-average molecular weight of the polymer A. In other words, $F_A$ can be regarded as a value that is correlated with viscosity per weight-average molecular weight of the polymer A. The presently disclosed dispersant composition having a value of 0.1 or more for $F_A$ can be said to mean that the weight-average molecular weight of the polymer A is not excessively large, whereas the presently disclosed dispersant composition having a value of 9.0 or less for $F_A$ can be said to mean that the viscosity of an NMP solution of the polymer A is not excessively high (i.e., spreading out of molecular chains of the polymer A is sufficiently restricted). The polymer A, which does not have an excessively high weight-average molecular weight and has restricted spreading out of molecular chains in this manner, can permeate well into gaps in CNT aggregates and can thereby improve dispersibility of CNTs in an obtained conductive material dispersion liquid.

In addition, the presently disclosed dispersant composition gives a T2 ratio of not less than 1.1 and not more than 1.8. The T2 ratio is a value determined by dividing T2s by T2c as indicated in formula (2). T2s is the transverse relaxation time of NMP. On the other hand, T2c is the transverse relaxation time of an NMP solution of the polymer A (polymer A concentration: 1 mass%). In more detail, T2c is composed of two components: the transverse relaxation time of NMP molecules that are adsorbed to the surface of the polymer A and the transverse relaxation time of NMP molecules in the bulk liquid. Since mobility of NMP molecules that are adsorbed to the surface of polymer A is restricted, these NMP molecules have a shorter transverse relaxation time than NMP molecules in the bulk liquid that can move freely. Accordingly, lower affinity between the polymer A and NMP is thought to reduce the number of NMP molecules that are adsorbed to the surface of the polymer A, thereby increasing T2c and reducing the T2 ratio. The presently disclosed dispersant composition having a T2 ratio that is not less than 1.1 and not more than 1.8 can be said to mean that the affinity of the polymer A with NMP is appropriately adjusted. The polymer A having appropriately adjusted affinity with a solvent (NMP) in this manner can permeate well into gaps in CNT aggregates in a state in which the solvent is attached to the surface thereof and can thereby improve dispersibility of CNTs in an obtained conductive material dispersion liquid. Moreover, the use of a conductive material dispersion liquid having high CNT dispersibility in this manner is thought to enable the formation of good electrical conduction paths in an electrode mixed material layer and reduction of IV resistance of an electrochemical device.

Therefore, IV resistance of an electrochemical device can be reduced by using the presently disclosed dispersant composition.

<Polymer A>

The polymer A contained in the presently disclosed dispersant composition includes a nitrile group-containing monomer unit and an alkylene structural unit having a carbon number of 4 or more and may optionally further include repeating units other than a nitrile group-containing monomer unit and an alkylene structural unit having a carbon number of 4 or more (hereinafter, referred to as "other repeating units").

The polymer A is a component that can cause good dispersion of CNTs as a conductive material in a conductive material dispersion liquid. In addition, the polymer A is a component that can also display a function of holding components contained in an electrode mixed material layer so that the components are not shed from the electrode mixed material layer.

<<Nitrile group-containing monomer unit>>

A nitrile group-containing monomer unit is a repeating unit that is derived from a nitrile group-containing monomer. Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. One of these nitrile group-containing monomers may be used individually, or two or more of these nitrile group-containing monomers may be used in combination. Of these nitrile group-containing monomers, acrylonitrile is preferable.

The proportional content of nitrile group-containing monomer units in the polymer A when all repeating units in the polymer A are taken to be 100 mass% is preferably 5 mass% or more, more preferably 10 mass% or more, even more preferably 20 mass% or more, further preferably 25 mass% or more, and particularly preferably 28 mass% or more, and is preferably 50 mass% or less, more preferably 40 mass% or less, even more preferably 35 mass% or less, and particularly preferably 32 mass% or less. When the proportional content of nitrile group-containing monomer units in the polymer A is 5 mass% or more, good solubility of the polymer A in the dispersant composition can be ensured. On the other hand, when the proportional content of nitrile group-containing monomer units in the polymer A is 50 mass% or less, dissolution of the polymer A in electrolyte solution can be inhibited, and electrical conduction paths formed by a conductive material in an electrode mixed material layer can be maintained well.

Note that the proportional content (mass%) of each monomer unit referred to in the present disclosure can be measured by a nuclear magnetic resonance (NMR) method such as $^1$H-NMR.

<<Alkylene structural unit having carbon number of 4 or more>>

An alkylene structural unit having a carbon number of 4 or more is a repeating unit that is formed of an alkylene structure represented by a general formula: $-C_nH_{2n}-$ (n is an integer of 4 or more).

Although the alkylene structural unit having a carbon number of 4 or more may be linear or branched, the alkylene structural unit having a carbon number of 4 or more is preferably linear (i.e., is preferably a linear alkylene structural unit).

Moreover, although no specific limitations are placed on the method by which the alkylene structural unit having a carbon number of 4 or more is introduced into the polymer, the methods described below in (1) and (2) may be used, for example.

(1) A method in which a polymer is produced from a monomer composition containing a conjugated diene monomer and then the polymer is hydrogenated to convert a conjugated diene monomer unit to an alkylene structural unit
(2) A method in which a polymer is produced from a monomer composition containing a 1-olefin monomer having a carbon number of 4 or more

Of these methods, method (1) is preferable in terms of ease of producing the polymer.

The conjugated diene monomer may be a conjugated diene compound having a carbon number of 4 or more such as 1,3-butadiene, isoprene (2-methyl-1,3-butadiene), 2,3-dimethyl-1,3-butadiene, or 1,3-pentadiene. Of these conjugated diene compounds, 1,3-butadiene and isoprene are preferable, and 1,3-butadiene is more preferable. In other words, the alkylene structural unit having a carbon number of 4 or more is preferably a structural unit obtained through hydrogenation of a conjugated diene monomer unit (i.e., a hydrogenated conjugated diene unit), more preferably a structural unit obtained through hydrogenation of a 1,3-butadiene unit (i.e., a hydrogenated 1,3-butadiene unit) or a structural unit obtained through hydrogenation of an isoprene unit (i.e., a hydrogenated isoprene unit), and even more preferably a hydrogenated 1,3-butadiene unit. Selective hydrogenation of conjugated diene monomer units can be carried out by a commonly known method such as an oil-layer hydrogenation method or a water-layer hydrogenation method.

The 1-olefin monomer having a carbon number of 4 or more may be 1-butene, 1-hexene, or the like, for example.

One of these conjugated diene monomers or 1-olefin monomers having a carbon number of 4 or more can be used individually, or two or more of these conjugated diene monomers or 1-olefin monomers having a carbon number of 4 or more can be used in combination.

The proportional content of alkylene structural units having a carbon number of 4 or more in the polymer A when all repeating units in the polymer A are taken to be 100 mass% is preferably 30 mass% or more, more preferably 40 mass% or more, and even more preferably 50 mass% or more, and is preferably 90 mass% or less, more preferably 80 mass% or less, even more preferably 70 mass% or less, and particularly preferably 65 mass% or less. When the proportional content of alkylene structural units having a carbon number of 4 or more in the polymer A is 30 mass% or more, dispersibility of a conductive material dispersion liquid can be improved through interactions between the polymer A and the surface of a conductive material. Moreover, when the proportional content of alkylene structural units having a carbon number of 4 or more in the polymer A is 90 mass% or less, good solubility of the polymer A in the dispersant composition can be ensured.

<<Other repeating units>>

Examples of other repeating units that can be included in the polymer A include, but are not specifically limited to, an aromatic vinyl monomer unit, an acid group-containing monomer unit, and so forth.

In particular, it is preferable for the polymer A to include an aromatic vinyl monomer unit and/or an acid group-containing monomer unit as another repeating unit from a viewpoint of further reducing IV resistance of an electrochemical device.

[Aromatic vinyl monomer unit]

Examples of aromatic vinyl monomers that can form an aromatic vinyl monomer unit include styrene, $\alpha$-methylstyrene, vinyltoluene, and divinylbenzene. One of these aromatic vinyl monomers may be used individually, or two or more of these aromatic vinyl monomers may be used in combination. Of these aromatic vinyl monomers, styrene is preferable.

In a case in which the polymer A includes an aromatic vinyl monomer unit, the proportional content of aromatic vinyl monomer units in the polymer A when all repeating units in the polymer A are taken to be 100 mass% is preferably 5 mass% or more, more preferably 10 mass% or more, and even more preferably 15 mass% or more, and is preferably 40 mass% or less, more preferably 35 mass% or less, and even more preferably 30 mass% or less. When the proportional content of aromatic vinyl monomer units in the polymer A is 5 mass% or more, adsorptivity of the polymer A to a conductive material can be improved. Moreover, when the proportional content of aromatic vinyl monomer units in the polymer A is 40 mass% or less, excessive adsorption of the polymer A to a conductive material can be inhibited. Note that it may be the case that the polymer A does not include an aromatic vinyl monomer unit (i.e., that the proportional content of aromatic vinyl monomer units in the polymer A is 0 mass%).

[Acid group-containing monomer unit]

Examples of acid group-containing monomers that can form an acid group-containing monomer unit include carboxyl group-containing monomers, sulfo group-containing monomers, and phosphate group-containing monomers. Note that the acid group of an acid group-containing monomer unit may form a salt with an alkali metal, ammonia, or the like.

Examples of carboxyl group-containing monomers that can form a carboxyl group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as monobutyl maleate, monononyl maleate, monodecyl maleate, monododecyl maleate, monooctadecyl maleate, and monofluoroalkyl maleates.

Examples of acid anhydrides of dicarboxylic acids include maleic anhydride, acrylic anhydride, methylmaleic anhydride, dimethylmaleic anhydride, and citraconic anhydride.

Moreover, an acid anhydride that produces a carboxyl group through hydrolysis can also be used as a carboxyl group-containing monomer.

Furthermore, an ethylenically unsaturated polybasic carboxylic acid such as butene tricarboxylic acid or a partial ester of an ethylenically unsaturated polybasic carboxylic acid such as monobutyl fumarate or mono-2-hydroxypropyl maleate can also be used as a carboxyl group-containing monomer.

Examples of sulfo group-containing monomers that can form a sulfo group-containing monomer unit include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the above-described monomers may be used individually, or two or more of the above-described monomers may be used in combination. Carboxyl group-containing monomers are preferable, methacrylic acid, itaconic acid, acrylic acid, and monobutyl maleate are more preferable, and methacrylic acid is even more preferably as an acid group-containing monomer that can form an acid group-containing monomer unit.

In a case in which the polymer A includes an acid group-containing monomer unit, the proportional content of acid group-containing monomer units in the polymer A when all repeating units in the polymer A are taken to be 100 mass% is preferably 1 mass% or more, and more preferably 2 mass% or more, and is preferably 20 mass% or less, and more preferably 15 mass% or less. When the proportional content of acid group-containing monomer units in the polymer A is 1 mass% or more, dispersibility of CNTs in a conductive material dispersion liquid improves, and IV resistance of an electrochemical device can be further reduced while also enhancing rate characteristics of the electrochemical device. On the other hand, when the proportional content of acid group-containing monomer units in the polymer A is 20 mass% or less, excessive adsorption of the polymer A to a conductive material can be inhibited, and IV resistance of an electrochemical device can be further reduced.

The proportional content of other repeating units in the polymer A is preferably 30 mass% or less, more preferably 25 mass% or less, even more preferably 20 mass% or less, and particularly preferably 15 mass% or less. The lower limit for the proportional content of other repeating units in the polymer A is not specifically limited and can be set as 1 mass% or more, or can be set as 5 mass% or more, for example.

<<Properties>>

[Weight-average molecular weight ($M_A$)]

The weight-average molecular weight ($M_A$) of the polymer A is preferably 1,000 or more, more preferably 5,000 or more, even more preferably 10,000 or more, further preferably 20,000 or more, and particularly preferably 25,000 or more, and is preferably 100,000 or less, more preferably 70,000 or less, even more preferably 55,000 or less, further preferably less than 50,000, and particularly preferably 45,000 or less. When $M_A$ is 1,000 or more, elution of the polymer A into electrolyte solution can be inhibited. Moreover, when $M_A$ is 100,000 or less, the polymer A can more easily permeate into CNT aggregates. Consequently, dispersibility of CNTs in a conductive material dispersion liquid improves, and IV resistance of an electrochemical device can be further reduced while also enhancing rate characteristics of the electrochemical device.

Note that $M_A$ can be adjusted by altering the type or amount of a polymerization initiator and/or chain transfer agent that is used in production of the polymer A, for example. More specifically, $M_A$ can be reduced by increasing the amount of a chain transfer agent that is used in production of the polymer A and can be increased by reducing the amount of the chain transfer agent.

[Viscosity ($\eta_A$)]

The viscosity ($\eta_A$) measured at a temperature of 25°C for a polymer solution obtained by adding NMP to the polymer A such that the concentration of the polymer A is 10 mass% is preferably 400 mPa·s or less, more preferably 350 mPa·s or less, even more preferably 300 mPa·s or less, further preferably 250 mPa·s or less, and particularly preferably 200 mPa·s or less. When $\eta_A$ is 400 mPa·s or less, spreading out of molecular chains of the polymer A is restricted, and the polymer A can more easily permeate into CNT aggregates. Consequently, dispersibility of CNTs in a conductive material dispersion liquid improves, and IV resistance of an electrochemical device can be further reduced while also enhancing rate characteristics of the electrochemical device. Moreover, good handleability of the dispersant composition can be ensured. The lower limit for $\eta_A$ is not specifically limited and can be set as 10 mPa·s or more, can be set as 30 mPa·s or more, or can be set as 50 mPa·s or more, for example.

Note that $\eta_A$ can be adjusted by altering the chemical composition or weight-average molecular weight ($M_A$) of the polymer A, for example. More specifically, $\eta_A$ can be increased by increasing the weight-average molecular weight ($M_A$) of the polymer A and can be reduced by reducing the weight-average molecular weight ($M_A$) of the polymer A.

[$F_A$]

The value of $F_A$ is required to be not less than 0.1 and not more than 9.0. Moreover, the value of $F_A$ is preferably 0.5 or more, more preferably 1.0 or more, and even more preferably 1.5 or more, and is preferably 8.0 or less, more preferably 7.0 or less, further preferably 6.0 or less, even further preferably 5.0 or less, and particularly preferably 4.0 or less. In a situation in which the value of $F_A$ is less than 0.1, the weight-average molecular weight of the polymer A increases, and it becomes difficult for the polymer A to permeate into CNT aggregates. Consequently, dispersibility of CNTs in a conductive material dispersion liquid decreases, IV resistance of an electrochemical device increases, and rate characteristics of the electrochemical device deteriorate. Moreover, in a situation in which the value of $F_A$ is more than 9.0, spreading out of molecular chains of the polymer A increases, and it becomes difficult for the polymer A to permeate into CNT aggregates. Consequently, dispersibility of CNTs in a conductive material dispersion liquid decreases, IV resistance of an electrochemical device increases, and rate characteristics of the electrochemical device deteriorate. Moreover, the amount of CNT aggregates in a conductive material dispersion liquid increases, and the volume resistivity of a coating obtained by applying the conductive material dispersion liquid onto a substrate increases.

[Transverse relaxation time (T2c)]

The transverse relaxation time (T2c) measured at a temperature of 25°C for a polymer solution obtained by adding NMP to the polymer A such that the concentration of the polymer A is 1 mass% is preferably 1,850 ms or more, more preferably 1,900 ms or more, even more preferably 1,950 ms or more, further preferably 2,000 ms or more, and particularly preferably 2,200 ms or more, and is preferably 2,500 ms or less, more preferably 2,450 ms or less, and even more preferably 2,400 ms or less. When T2c is 1,850 ms or more, excessive adsorption of a solvent onto the polymer A is inhibited, and the polymer A can more easily permeate into CNT aggregates. Consequently, dispersibility of CNTs in a conductive material dispersion liquid improves, and IV resistance of an electrochemical device can be further reduced while also enhancing rate characteristics of the electrochemical device. Moreover, when T2c is 2,500 ms or less, affinity of the polymer A with a solvent improves. Consequently, dispersibility of CNTs in a conductive material dispersion liquid improves, and IV resistance of an electrochemical device can be further reduced while also enhancing rate characteristics of the electrochemical device.

Note that T2c can be adjusted by altering the chemical composition or the weight-average molecular weight of the polymer A, for example. More specifically, T2c can be reduced by increasing the weight-average molecular weight of the polymer A and can be increased by reducing the weight-average molecular weight of the polymer A.

[T2 ratio]

The T2 ratio is required to be not less than 1.1 and not more than 1.8. Moreover, the T2 ratio is preferably 1.2 or more, more preferably 1.3 or more, and even more preferably 1.4 or more, and is preferably 1.7 or less, more preferably 1.6 or less, and even more preferably 1.5 or less. In a situation in which the T2 ratio is less than 1.1, affinity of the polymer A with a solvent decreases. Consequently, dispersibility of CNTs in a conductive material dispersion liquid decreases, viscosity of the conductive material dispersion liquid increases, IV resistance of an electrochemical device increases, and rate characteristics of the electrochemical device deteriorate. Moreover, in a situation in which the T2 ratio is more than 1.8, affinity of the polymer A with a solvent increases, and it becomes difficult for the polymer A to permeate into CNT aggregates. Consequently, dispersibility of CNTs in a conductive material dispersion liquid decreases, IV resistance of an electrochemical device increases, and rate characteristics of the electrochemical device deteriorate.

[Iodine value]

The iodine value of the polymer A is preferably 5 mg/100 mg or more, more preferably 10 mg/100 mg or more, even more preferably 15 mg/100 mg or more, and particularly preferably 17 mg/100 mg or more, and is preferably 60 mg/100 mg or less, more preferably 50 mg/100 mg or less, even more preferably 40 mg/100 mg or less, further preferably 30 mg/100 mg or less, and particularly preferably 20 mg/100 mg or less. When the iodine value of the polymer A is 60 mg/100 mg or less, good oxidation resistance of the polymer A can be ensured.

Note that the iodine value of the polymer A can be adjusted by altering hydrogenation conditions in production of the polymer A, for example.

<<Production method of polymer A>>

No specific limitations are placed on the method by which the polymer A described above is produced. For example, the polymer A can be produced by polymerizing a monomer composition containing the above-described monomers, optionally in the presence of a chain transfer agent, to obtain a polymer and then hydrogenating the obtained polymer.

The proportional content of each monomer in the monomer composition used to produce the polymer A can be set in accordance with the proportional content of each repeating unit in the polymer A.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction. Furthermore, a typically used emulsifier, dispersant, polymerization initiator, chain transfer agent, or the like can be used in the polymerization in the same amount as is typically used. In particular, it is preferable to use tert-dodecyl mercaptan as a chain transfer agent. The additive amount of the chain transfer agent is preferably not less than 0.5 parts by mass and not more than 2.5 parts by mass based on 100 parts by mass of the total amount of monomers in the monomer composition used in the polymerization reaction. The polymerization temperature is preferably not lower than 0°C and not higher than 50°C.

The method by which the polymer is hydrogenated is not specifically limited and can be a typical method using a catalyst (for example, refer to WO2012/165120A1, WO2013/080989A1, and JP2013-8485A).

<Solvent>

Examples of solvents that can be contained in the presently disclosed dispersant composition include water and organic solvents without any specific limitations. Examples of organic solvents that can be used include acetonitrile, N-methyl-2-pyrrolidone (NMP), tetrahydrofuran, acetone, acetylpyridine, cyclopentanone, dimethylformamide, dimethyl sulfoxide, methylformamide, methyl ethyl ketone, furfural, ethylenediamine, dimethylbenzene (xylene), methylbenzene (toluene), cyclopentyl methyl ether, and isopropyl alcohol. One of these solvents may be used individually, or two or more of these solvents may be used in combination. Of these solvents, NMP is preferable from a viewpoint of further reducing IV resistance of an electrochemical device. Note that it may be the case that the presently disclosed dispersant composition does not contain a solvent.

<Other components>

The presently disclosed dispersant composition can contain components other than the polymer A and the solvent described above (i.e., other components). For example, the dispersant composition may contain a known polymer component other than the polymer A described above (copolymer of polyethylene glycol and styrene, styrene-maleic acid copolymer, acrylic acid copolymer, etc.). Moreover, the dispersant composition may contain monomers that were used in production of the polymer A (i.e., unreacted residual monomers) and known additives. Note that the proportion constituted by other components among all solid content contained in the dispersant composition is normally 10 mass% or less, but is not specifically limited thereto.

Examples of such known additives include emulsifiers, viscosity modifiers, and antioxidants. No specific limitations are placed on these known additives so long as they do not affect reactions in an electrochemical device, and commonly known examples thereof, such as any of those described in WO2012/115096A1, for example, can be used. Note that one other component may be used individually, or two or more other components may be used in combination in a freely selected ratio.

<Production of dispersant composition for electrochemical device>

The presently disclosed dispersant composition can be produced by mixing the above-described polymer A, solvent, other components, and so forth by a known method. Specifically, the dispersant composition can be produced by mixing the above-described components using a mixer such as a ball mill, a sand mill, a bead mill, a pigment disperser, a grinding machine, an ultrasonic disperser, a homogenizer, a planetary mixer, or a FILMIX.

Note that in a situation in which the polymer A is polymerized in a solvent, a dispersion liquid having the polymer A dispersed in the solvent may be used in that form as the dispersant composition. Moreover, the pH of the dispersant composition can be adjusted through addition of an acid ($H_2SO_4$ aqueous solution, etc.) or an alkali (KOH aqueous solution, etc.). For example, the pH of the dispersant composition can be adjusted to within a range of 3.0 to 9.5. Furthermore, in a situation in which a different solvent to a polymerization solvent that has been used in polymerization of the polymer A is to be adopted as the solvent of the dispersant composition, the dispersant composition may be produced by producing the polymer A in the polymerization solvent, subsequently optionally performing pH adjustment or the like, and then performing solvent exchange by a known technique.

(Conductive material dispersion liquid for electrochemical device)

The presently disclosed conductive material dispersion liquid contains at least the dispersant composition set forth above, a conductive material, and a solvent and can optionally further contain other components that can be compounded in an electrode of an electrochemical device. In other words, the conductive material dispersion liquid contains at least the polymer A, a conductive material, and a solvent and can optionally further contain other components. Note that the presently disclosed conductive material dispersion liquid does not normally contain an electrode active material. Moreover, the solvent that is contained in the conductive material dispersion liquid may just be the solvent that was contained in the dispersant composition or may be a mixture of the solvent that was contained in the dispersant composition and an additional solvent that has been used in production of the conductive material dispersion liquid.

As a result of the presently disclosed conductive material dispersion liquid containing the presently disclosed dispersant composition set forth above, it is possible to reduce IV resistance of an electrochemical device by using this conductive material dispersion liquid.

<Dispersant composition>

The dispersant composition that is used in the conductive material dispersion liquid is the presently disclosed dispersant composition set forth above.

<<Proportional content of polymer A>>

The proportional content of the polymer A in the conductive material dispersion liquid when the total amount of the conductive material dispersion liquid is taken to be 100 mass% is preferably 0.02 mass% or more, more preferably 0.1 mass% or more, and even more preferably 0.5 mass% or more, and is preferably 8 mass% or less, more preferably 6 mass% or less, even more preferably 4 mass% or less, and particularly preferably 2 mass% or less. When the proportional content of the polymer A in the conductive material dispersion liquid is 0.02 mass% or more, dispersibility of CNTs in the conductive material dispersion liquid can be improved through interactions between molecules. Moreover, when the proportional content of the polymer A in the conductive material dispersion liquid is 8 mass% or less, operability in electrode production can be increased due to low viscosity of the conductive material dispersion liquid.

The presently disclosed conductive material dispersion liquid preferably contains 5 parts by mass or more, more preferably contains 10 parts by mass or more, and even more preferably contains 15 parts by mass or more of the polymer A per 100 parts by mass of the conductive material, and preferably contains 35 parts by mass or less, more preferably contains 30 parts by mass or less, and even more preferably contains 25 parts by mass or less of the polymer A per 100 parts by mass of the conductive material. When the conductive material dispersion liquid contains 5 parts by mass or more of the polymer A per 100 parts by mass of the conductive material, dispersibility of CNTs in the conductive material dispersion liquid can be improved. On the other hand, when the conductive material dispersion liquid contains 35 parts by mass or less of the polymer A per 100 parts by mass of the conductive material, IV resistance of an electrochemical device can be further reduced while also enhancing rate characteristics of the electrochemical device.

<Conductive material>

No specific limitations are placed on the conductive material that is used in the presently disclosed conductive material dispersion liquid so long as it includes CNTs. For example, the presently disclosed conductive material dispersion liquid may contain just CNTs as the conductive material or may contain CNTs and a conductive material other than CNTs as the conductive material.

The CNTs can be single-walled or multi-walled CNTs (multi-walled CNTs are inclusive of cup-stacked CNTs).

Moreover, conductive carbon materials such as carbon black (for example, acetylene black, Ketjenblack® (Ketjenblack is a registered trademark in Japan, other countries, or both), and furnace black), carbon nanohorns, milled carbon fiber obtained through pyrolysis and subsequent pulverization of polymer fiber, single-layered or multi-layered graphene, and carbon non-woven fabric sheet obtained through pyrolysis of non-woven fabric formed of polymer fiber; fibers and foils of various metals; and so forth may be further included as conductive materials other than CNTs.

One of these conductive materials may be used individually, or two or more of these conductive materials may be used in combination in a freely selected ratio.

<<Proportional content of CNTs>>

The proportional content of the CNTs in the conductive material dispersion liquid when the total amount of the conductive material dispersion liquid is taken to be 100 mass% is preferably 0.05 mass% or more, more preferably 0.1 mass% or more, even more preferably 1 mass% or more, and particularly preferably 2 mass% or more, and is preferably 10 mass% or less, more preferably 9 mass% or less, even more preferably 8 mass% or less, and particularly preferably 7 mass% or less. When the proportional content of the CNTs in the conductive material dispersion liquid is 0.05 mass% or more, excessive reduction of solid content concentration during production of a slurry for an electrode can be inhibited. Moreover, when the proportional content of the CNTs in the conductive material dispersion liquid is 10 mass% or less, operability can be improved by restricting the viscosity of the conductive material dispersion liquid to a low level.

<Solvent>

The solvent can function as a dispersion medium in the presently disclosed conductive material dispersion liquid. Any of the same solvents as can be compounded in the presently disclosed dispersant composition can be used without any specific limitations as the solvent that is used in the presently disclosed conductive material dispersion liquid.

<Solid content concentration>

The solid content concentration of the conductive material dispersion liquid is preferably 0.1 mass% or more, more preferably 1 mass% or more, and even more preferably 5 mass% or more, and is preferably 15 mass% or less, more preferably 12.5 mass% or less, and even more preferably 10 mass% or less. When the solid content concentration of the conductive material dispersion liquid is 0.1 mass% or more, rate characteristics of an electrochemical device can be improved. On the other hand, when the solid content concentration of the conductive material dispersion liquid is 15 mass% or less, coatability of a slurry for an electrode that has been produced using the conductive material dispersion liquid improves.

<Production of conductive material dispersion liquid for electrochemical device>

The presently disclosed conductive material dispersion liquid can be produced, for example, through a step of mixing the presently disclosed dispersant composition set forth above, the conductive material, the solvent, and other optional components to obtain a mixture (wetting step), a step of performing dispersing treatment of the obtained mixture to obtain a conductive material preliminary dispersion liquid (primary dispersing step), and a step of performing further dispersing treatment of the obtained conductive material preliminary dispersion liquid to obtain a conductive material dispersion liquid (secondary dispersing step).

The wetting step is aimed at causing the polymer A and the solvent to permeate into gaps in CNT aggregates. Moreover, the primary dispersing step is aimed at causing disintegration of CNT aggregates contained in the mixture through comparatively weak dispersing treatment. Furthermore, the secondary dispersing step is aimed at stabilizing dispersion of the CNTs through stronger dispersing treatment. The dispersing treatment adopted in the primary dispersing step may be treatment by ultrasonication, a homogenizing disper, a homogenizing mixer, or the like, and the dispersing treatment adopted in the secondary dispersing step may be treatment by a bead mill, a planetary mill, a high-pressure homogenizer, or the like.

<Slurry for electrochemical device electrode>

The presently disclosed slurry for an electrode contains at least the conductive material dispersion liquid set forth above and an electrode active material and can optionally further contain other components. In other words, the presently disclosed slurry for an electrode contains at least the polymer A, a conductive material, a solvent, and an electrode active material and can optionally further contain other components.

As a result of the presently disclosed slurry for an electrode containing the presently disclosed dispersant composition set forth above, it is possible to reduce IV resistance of an electrochemical device by using this slurry for an electrode.

Although the following describes, as one example, a case in which the presently disclosed slurry for an electrode is a slurry for a lithium ion secondary battery positive electrode, the presently disclosed slurry for an electrode is not limited to the following example.

<Conductive material dispersion liquid>

The conductive material dispersion liquid that is used in the slurry for an electrode is the presently disclosed conductive material dispersion liquid set forth above.

<Electrode active material>

The electrode active material is a material that gives and receives electrons in an electrode of a secondary battery. A substance that can occlude and release lithium is normally used as a positive electrode active material for a lithium ion secondary battery.

Specifically, known positive electrode active materials such as lithium-containing cobalt oxide ($LiCoO_2$), lithium manganate ($LiMn_2O_4$), lithium-containing nickel oxide ($LiNiO_2$), a lithium-containing complex oxide of Co-Ni-Mn ($Li(CoMnNi)O_2$; $LiNi_{0.8}Co_{0.1}Mn_{0.1}O_2$), a lithium-containing complex oxide of Ni-Mn-Al, a lithium-containing complex oxide of Ni-Co-Al ($Li(CoNiAl)O_2$), olivine-type lithium iron phosphate ($LiFePO_4$), olivine-type lithium manganese phosphate ($LiMnPO_4$), a $Li_2MnO_3$-$LiNiO_2$-based solid solution, a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$ may be used without any specific limitations as a positive electrode active material for a lithium ion secondary battery.

The amount and particle diameter of the positive electrode active material are not specifically limited and can be the same as those of conventionally used electrode active materials.

Examples of other components that may be used include, but are not specifically limited to, known binders that are typically used in an electrode for an electrochemical device (for example, fluorine-containing polymers such as polyvinylidene fluoride) and the same components as the other components that can be compounded in the presently disclosed dispersant composition.

<Production of slurry for electrochemical device electrode>

The presently disclosed slurry for an electrode can be produced by mixing the above-described dispersant composition, conductive material, solvent, electrode active material, and other optional components. The method of mixing is not specifically limited and any of the same methods as for production of the presently disclosed dispersant composition described above can be adopted.

Moreover, no specific limitations are placed on the order in which the above-described components are mixed. It may be the case that all components compounded in the dispersant composition, the conductive material, the solvent, the electrode active material, and other optional components are mixed all at once, or it may be the case that the conductive material dispersion liquid set forth above is produced and then the obtained conductive material dispersion liquid is mixed with the electrode active material and other optional components, for example.

(Electrode for electrochemical device)

The presently disclosed electrode for an electrochemical device includes an electrode mixed material layer formed using the slurry for an electrode set forth above on a current collector, for example. Specifically, the electrode mixed material layer is normally formed of a dried product of the slurry for an electrode set forth above, contains at least the above-described polymer A, conductive material, and electrode active material, and optionally contains other components. Note that components contained in the electrode mixed material layer are components that were contained in the slurry for an electrode set forth above and that the preferred ratio of each component is the same as the preferred ratio of each component in the slurry for an electrode.

The presently disclosed electrode for an electrochemical device can reduce IV resistance of an electrochemical device as a result of the electrode mixed material layer being formed using the slurry for an electrode set forth above.

<Formation method of electrode for electrochemical device>

The electrode mixed material layer of the presently disclosed electrode for an electrochemical device can be formed on the current collector through a step of applying the slurry for an electrode set forth above onto the current collector (application step) and a step of drying the slurry for an electrode that has been applied onto the current collector to form an electrode mixed material layer on the current collector (drying step), for example.

<<Application step>>

The method by which the slurry for an electrode is applied onto the current collector is not specifically limited and may be a commonly known method. Specific examples of application methods that can be used include comma coating, doctor blading, dip coating, reverse roll coating, direct roll coating, gravure coating, extrusion coating, and brush coating. During application, the slurry for an electrode may be applied onto just one side of the current collector or may be applied onto both sides of the current collector. The thickness of a film of the slurry for an electrode on the current collector after application but before drying can be set as appropriate according to the thickness of the electrode mixed material layer to be obtained through drying.

The current collector onto which the slurry for an electrode is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

<<Application step>>

The method by which the slurry for an electrode on the current collector is dried is not specifically limited and may be a commonly known method. Examples of drying methods that can be used include drying by warm, hot, or low-humidity air; drying in a vacuum; and drying by irradiation with infrared light, an electron beam, or the like. Through drying of the slurry for an electrode on the current collector as described above, an electrode mixed material layer is formed on the current collector, thereby providing an electrode for an electrochemical device that includes the current collector and the electrode mixed material layer.

After the drying step, the electrode mixed material layer may be further subjected to a pressing process, such as mold pressing or roll pressing. The pressing process can further improve close adherence between the electrode mixed material layer and the current collector.

(Electrochemical device)

The presently disclosed electrochemical device may be, but is not specifically limited to, a lithium ion secondary battery or an electric double-layer capacitor, and is preferably a lithium ion secondary battery. Moreover, the presently disclosed electrochemical device has low IV resistance as a result of including the presently disclosed electrode for an electrochemical device.

Although the following describes, as one example, a case in which the electrochemical device is a lithium ion secondary battery, the presently disclosed electrochemical device is not limited to the following example. A lithium ion secondary battery that is an example of the presently disclosed electrochemical device normally includes electrodes (positive electrode and negative electrode), an electrolyte solution, and a separator and has the presently disclosed electrode for an electrochemical device as at least one of the positive electrode and the negative electrode.

<Electrodes>

A known electrode can be used without any specific limitations as an electrode other than the electrode for an electrochemical device set forth above that can be used in the lithium ion secondary battery that is an example of the presently disclosed electrochemical device. Specifically, an electrode obtained by forming an electrode mixed material layer on a current collector by a known production method can be used as an electrode other than the electrode for an electrochemical device set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and diethyl carbonate is more preferable.

The concentration of the electrolyte in the electrolyte solution can be adjusted as appropriate. Moreover, a known additive such as vinylene carbonate (VC), fluoroethylene carbonate (FEC), or ethyl methyl sulfone may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery that is an example of the presently disclosed electrochemical device can be produced by, for example, stacking the positive electrode and the negative electrode with the separator in-between, performing rolling, folding, or the like of the resultant stack in accordance with the battery shape, as necessary, to place the stack in a battery container, injecting the electrolyte solution into the battery container, and sealing the battery container. In order to prevent pressure increase inside the lithium ion secondary battery and occurrence of overcharging or overdischarging, an overcurrent preventing device such as a fuse or a PTC device, an expanded metal or a lead plate may be provided as necessary. The shape of the lithium ion secondary battery may be a coin type, a button type, a sheet type, a cylinder type, a prismatic type, a flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate "$M_A$", "$\eta_A$", "$F_A$", "$T2_C$", "$T2_S$", "T2 ratio", the iodine value of a polymer A, the volume resistivity, the viscosity of a conductive material dispersion liquid, and the IV resistance and rate characteristics of a secondary battery.

<Weight-average molecular weight ($M_A$)>

The weight-average molecular weight ($M_A$) of a polymer A produced in each example or comparative example was measured by gel permeation chromatography (GPC) under the following measurement conditions using a LiBr-DMF (N,N-dimethylformamide) solution of 10 mM in concentration.

- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK standard polystyrene (produced by Tosoh Corporation)

<Iodine value>

After coagulating 100 g of a water dispersion of a polymer A produced in each example or comparative example in 1 L of methanol, 12 hours of vacuum drying was performed at a temperature of 60°C to obtain a dry polymer. The iodine value (mg/100 mg) of the obtained dry polymer was measured in accordance with JIS K6235(2006).

<Viscosity ($\eta_A$)>

A dry polymer was obtained from a water dispersion of a polymer A produced in each example or comparative example in the same way as in the evaluation method of the iodine value described above. NMP was added to the obtained dry polymer such that the concentration of the polymer A was 10% to produce a polymer solution. The viscosity (mPa·s) of this polymer solution was measured using a B-type viscometer (produced by Toki Sangyo Co., Ltd.; product name: TVB-10; temperature: 25°C; rotation speed: 60 rpm) and was taken to be $\eta_A$ (mPa·s).

<$F_A$>

A value of "$F_A$" was calculated from the following formula (1) using "$M_A$" and "$\eta_A$ (mPa·s)" that were determined as described above.

$$F_A = (\eta_A / M_A) \times 1,000 \cdots (1)$$

<Transverse relaxation time (T2s)>

NMP was loaded into a Ø10 mm NMR sample tube up to a height of approximately 4 cm from the bottom of the tube. The NMR sample tube was set in a holder that was heated to 25°C, was left for at least 5 minutes for temperature stabilization, and then the transverse relaxation time (T2s) was measured using a pulse nuclear magnetic resonance spectrometer (produced by Xigo Nanotools; product name: Acorn Area).

With regards to the measurement conditions, the measured nucleus was set as $^1$H, the measurement frequency was set as 13 MHz, a CPMG (Carr-Purcell-Meiboom-Gill) pulse sequence was adopted as a pulse sequence, and the number of scans was set as 4 to thereby obtain a free induction decay (FID) curve. Dedicated software accompanying the spectrometer was used to perform curve fitting of the obtained FID curve with a single exponential function to determine the transverse relaxation time (T2s). T2s was 3,345 (ms).

<Transverse relaxation time (T2c)>

A dry polymer was obtained from a water dispersion of a polymer A produced in each example or comparative example in the same way as in the evaluation method of the iodine value described above. NMP was added to the obtained dry polymer such that the concentration of the polymer A was 1% to produce a polymer solution. Measurement and curve fitting were performed in the same manner as with T2s with the exception that this polymer solution was used as a measurement sample to determine the transverse relaxation time (T2c).

<T2 ratio>

The "T2 ratio" was calculated from the following formula (2) using "T2c (ms)" and "T2s (ms)" that were determined as described above.

$$\text{T2 ratio} = \text{T2s}/\text{T2c} \cdots (2)$$

<Volume resistivity>

A conductive material preliminary dispersion liquid produced in each example or comparative example was applied onto a PET (polyethylene terephthalate) film by a table coater using a doctor blade and was dried in a 100°C oven for 1 hour to obtain a coating of 10 $\mu$m to 20 $\mu$m in thickness. The surface resistivity ($\Omega$/sq.) of the obtained coating was measured in accordance with JIS K7194:1994 using a resistivity meter (produced by Mitsubishi Chemical Corporation; product name: Loresta GP). In addition, the thickness (cm) of the coating at the measurement location, excluding the thickness of the PET film, was measured. The volume resistivity ($\Omega$·cm) was calculated by: volume resistivity ($\Omega$·cm) = surface resistivity ($\Omega$/sq.) $\times$ thickness (cm). Measurements were made in the same manner at 10 points, and an average value of the measurements was evaluated by the following standard. A smaller average value for volume resistivity indicates greater disintegration of CNT aggregates in the conductive material dispersion liquid (i.e., better functioning of a dispersant composition as a dispersant).

A: Volume resistivity average value of 3 $\Omega$·cm or less
B: Volume resistivity average value of more than 3 $\Omega$·cm and not more than 10 $\Omega$·cm
C: Volume resistivity average value of more than 10 $\Omega$·cm

<Viscosity of conductive material dispersion liquid>

A conductive material dispersion liquid having a solid content concentration 7.2% that was produced in each example or comparative example was used to measure viscosity. Specifically, the viscosity was measured under conditions of a temperature of 25°C and a shear rate of 2.5 s$^{-1}$ using a rheometer (produced by Anton Paar; product name: MCR 302) and was evaluated by the following standard. A lower conductive material dispersion liquid viscosity at the same solid content concentration indicates better dispersion of CNTs in the conductive material dispersion liquid (i.e., better functioning of a dispersant composition as a dispersant).

A: Viscosity of 20 mPa·s or less
B: Viscosity of more than 20 mPa·s and less than 40 mPa·s
C: Viscosity of 40 mPa·s or more

<IV resistance>

A lithium ion secondary battery produced in each example or comparative example was left at rest at a temperature of 25°C for 5 hours after injection of electrolyte solution. Next, a charge/discharge operation of charging to a cell voltage of 4.2 V and discharging to a cell voltage of 3.0 V by a 0.2C constant-current method was repeated three times, and the initial capacity was measured. Thereafter, the lithium ion secondary battery was charged to a state of charge (SOC) of 50% and was then subjected to 20 seconds of charging and 20 seconds of discharging at each of 0.5C, 1.0C, 1.5C, and 2.0C centered on the SOC of 50%. The battery voltage after 20 seconds in each case (charging side and discharging side) was plotted against the current value, and the gradient of the plot was determined as the IV resistance ($\Omega$) (IV resistance during charging and IV resistance during discharging). The obtained IV resistance value ($\Omega$) was evaluated by the following standard. A smaller IV resistance value indicates less internal resistance.

A: IV resistance value of less than 2.20 $\Omega$
B: IV resistance value of not less than 2.20 $\Omega$ and less than 2.35 $\Omega$
C: IV resistance value of not less than 2.35 $\Omega$ and less than 2.50 $\Omega$
D: IV resistance value of 2.50 $\Omega$ or more

<Rate characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.0 V by a 0.2C constant-current method at a temperature of 25°C. Thereafter, the lithium ion secondary battery was subjected to CC-CV charging (upper limit cell voltage 4.20 V) with a 0.2C constant current and CC discharging to a cell voltage of 3.00 V with a 0.2C constant current. This charging and discharging at 0.2C was repeated three times.

Next, the lithium ion secondary battery was subjected to 0.2C constant-current charging and discharging between cell voltages of 4.20 V and 3.00 V in an environment having a temperature of 25°C, and the discharge capacity at this time was defined as C0. Thereafter, the lithium ion secondary battery was CC-CV charged with a 0.2C constant current in the same manner, was CC discharged to 3.00 V with a 3.0C constant current in an environment having a temperature of 25°C, and the discharge capacity at this time was defined as C1. A ratio (percentage, capacity maintenance rate) of the discharge capacity (C1) at 3.0C relative to the discharge capacity (C0) at 0.2C, expressed by (C1/C0) × 100(%), was determined as a rate characteristic and was evaluated by the following standard. A larger value for this capacity maintenance rate indicates less reduction of discharge capacity at high current and lower internal resistance (i.e., better rate characteristics).

 A: Capacity maintenance rate value of 65% or more
 B: Capacity maintenance rate value of not less than 55% and less than 65%
 C: Capacity maintenance rate value of less than 55%

(Example 1)

<Production of dispersant composition>

[Synthesis of polymer A]

A reactor was charged, in order, with 200 parts of deionized water, 25 parts of sodium dodecylbenzenesulfonate aqueous solution of 10% in concentration, 30 parts of acrylonitrile as a nitrile group-containing monomer, 10 parts of methacrylic acid as an acid group-containing monomer, and 1.80 parts of tert-dodecyl mercaptan as a chain transfer agent. Next, gas inside of the reactor was purged three times with nitrogen, and then 60 parts of 1,3-butadiene as a conjugated diene monomer was charged to the reactor. The reactor was held at 10°C while charging 0.03 parts of cumene hydroperoxide as a polymerization initiator, a reductant, and an appropriate amount of a chelating agent and while a polymerization reaction was continued under stirring. At the point at which the polymerization conversion rate reached 80%, 0.1 parts of hydroquinone aqueous solution of 10% in concentration was added as a polymerization inhibitor to stop the polymerization reaction. Next, residual monomer was removed at a water temperature of 80°C to yield a water dispersion of a precursor of a polymer A.

In an autoclave, a palladium catalyst (solution obtained by mixing 1% palladium acetate acetone solution with an equal weight of deionized water) was added to the obtained water dispersion of the precursor of a polymer A such that the palladium content was 3,000 ppm relative to the weight of solid content contained in the water dispersion of the precursor of a polymer A, the solid content concentration was adjusted to 10% through addition of deionized water, and a hydrogenation reaction was performed at a hydrogen pressure of 3 MPa and a temperature of 55°C for 3 hours to yield a water dispersion of a polymer A.

Thereafter, the contents were restored to normal temperature, the system was converted to a nitrogen atmosphere, and then the water dispersion was concentrated to a solid content concentration of 20% using an evaporator.

[pH adjustment]

The obtained water dispersion (solid content concentration: 20%) of the polymer A was adjusted to pH 3.0 through addition of 2.5% $H_2SO_4$ aqueous solution. After adding 200 parts of NMP to 100 parts of the pH adjusted water dispersion of the polymer A, water and residual monomer were completely evaporated under reduced pressure, and then NMP was also evaporated to yield a dispersant composition (NMP solution of polymer A having solid content concentration of 10%).

<Production of conductive material dispersion liquid>

[Wetting step]

A mixture was obtained by mixing 6.0 parts of multi-walled CNTs (specific surface area: 186 $m^2$/g; average diameter: 5 nm to 11 nm; average length: 5 μm to 30 μm) as a conductive material, 1.2 parts (in terms of solid content) of the dispersant composition produced as described above (NMP solution of polymer A having solid content concentration of 10%), and NMP in an amount such that the total amount of an obtained conductive material preliminary dispersion liquid was 100 parts.

[Primary dispersing step]

The obtained mixture was stirred at a circumferential speed of 30 m/s for 300 seconds using a thin-film spin system high-speed mixer (produced by PRIMIX Corporation; product name: FILMIX® 40-L (FILMIX is a registered trademark in Japan, other countries, or both)) to produce a conductive material preliminary dispersion liquid having a solid content concentration of 7.2 mass%.
This conductive material preliminary dispersion liquid was used to evaluate volume resistivity. The result is shown in Table 1.

[Secondary dispersing step]

The conductive material preliminary dispersion liquid obtained as described above was mixed at a circumferential speed of 8 m/s for 1 hour using a bead mill in which zirconia beads of 1 mm in diameter were used to produce a conductive material dispersion liquid having a solid content concentration of 7.2%.
The viscosity of this conductive material dispersion liquid was evaluated. The result is shown in Table 1.

<Production of slurry for positive electrode>

A slurry for a positive electrode was produced by mixing together 98.0 parts of a ternary active material $(LiNi_{0.6}Co_{0.2}Mn_{0.2}O_2$; average particle diameter: 6 $\mu$m) as a positive electrode active material, 1.0 parts of polyvinylidene fluoride as a binder, 1.0 parts (in terms of solid content) of the conductive material dispersion liquid produced as described above, and NMP as a solvent and then mixing these materials in a planetary mixer (60 rpm, 30 minutes). Note that the additive amount of NMP was adjusted such that the viscosity of the obtained slurry for a positive electrode (measured by single-cylinder rotational viscometer in accordance with JIS Z8803:1991; temperature: 25°C; rotation speed: 60 rpm) was within a range of 3,000 mPa·s to 5,000 mPa·s.

<Production of positive electrode>

Aluminum foil of 15 $\mu$m in thickness was prepared as a current collector. The slurry for a positive electrode produced as described above was applied onto the aluminum foil by a comma coater such as to have a coating weight after drying of 19 mg/cm$^2$ and was dried at 120°C for 2 minutes to obtain a positive electrode web. The positive electrode web was rolled by roll pressing to produce a positive electrode including the aluminum foil and a positive electrode mixed material layer having a density of 3.5 g/cm$^3$.

<Production of negative electrode>

A planetary mixer equipped with a disper blade was charged with 100 parts of artificial graphite (specific surface area: 4 m$^2$/g) as a negative electrode active material and 1 part in terms of solid content of a 1% aqueous solution of carboxymethyl cellulose (produced by DKS Co., Ltd.; product name: BSH-12) as a viscosity modifier. These materials were adjusted to a solid content concentration of 55% with deionized water and were then mixed at a temperature of 25°C for 60 minutes. Next, the solid content concentration was adjusted to 52% with deionized water. Thereafter, a further 15 minutes of mixing was performed to yield a mixture.
Deionized water and 1.0 parts in terms of solid content of a 40% water dispersion of a styrene-butadiene copolymer as a binder were added to the obtained mixture, the final solid content concentration was adjusted to 50%, and a further 10 minutes of mixing was performed. The resultant mixture was subjected to defoaming under reduced pressure to yield a slurry composition for a negative electrode having good fluidity.
The obtained slurry composition for a negative electrode was applied onto copper foil of 20 $\mu$m in thickness serving as a current collector by a comma coater such as to have a coating weight after drying of 11 mg/cm$^2$ and was dried at 100°C to obtain a negative electrode web. The negative electrode web was rolled by roll pressing to obtain a negative electrode having a density of 1.5 g/cm$^3$.

<Production of lithium ion secondary battery>

An aluminum packing case was prepared as a case of a lithium ion secondary battery. The positive electrode was cut out as a 4 cm × 4 cm square and was arranged with the surface at the current collector-side in contact with the aluminum packing case. Next, a separator (microporous membrane made of polyethylene) of 15 $\mu$m in thickness was cut out as a 5 cm × 5 cm square and was placed on the surface of the positive electrode mixed material layer of the positive electrode. In addition, the negative electrode was cut out as a 4.2 cm × 4.2 cm square and was arranged on the separator such that the surface at the negative electrode mixed material layer-side faced toward the separator. Thereafter, a LiPF$_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was loaded as an electrolyte solution. The aluminum packing case was then closed by heat sealing at 150°C to tightly seal an opening of the aluminum packing and thereby produce a laminate cell-type lithium ion secondary battery.

IV resistance and rate characteristics were evaluated for the produced lithium ion secondary battery. The results are shown in Table 1.

(Example 2)

A conductive material dispersion liquid, a slurry for a positive electrode, a positive electrode, a negative electrode, and a lithium ion secondary battery were prepared or produced in the same way as in Example 1 with the exception that a dispersant composition produced as described below was used. Evaluations were conducted in the same manner as in Example 1. The results are shown in Table 1.

<Production of dispersant composition>

[Synthesis of polymer A]

A water dispersion (solid content concentration: 20%) of a polymer A was obtained in the same way as in Example 1 with the exception that monobutyl maleate was used instead of methacrylic acid as an acid group-containing monomer.

[pH adjustment]

The water dispersion (solid content concentration: 20%) of the polymer A obtained as described above was adjusted to pH 9.0 through addition of 2.5% KOH aqueous solution. After adding 200 parts of NMP to 100 parts of the pH adjusted water dispersion of the polymer A, water and residual monomer were completely evaporated under reduced pressure, and then NMP was also evaporated until the concentration reached 10% to yield an NMP solution of the polymer A as a dispersant composition.

(Example 3)

A conductive material dispersion liquid, a slurry for a positive electrode, a positive electrode, a negative electrode, and a lithium ion secondary battery were prepared or produced in the same way as in Example 1 with the exception that a dispersant composition produced as described below was used. Evaluations were conducted in the same manner as in Example 1. The results are shown in Table 1.

<Production of dispersant composition>

[Synthesis of polymer A]

A water dispersion (solid content concentration: 20%) of a polymer A was obtained in the same way as in Example 1 with the exception that the used amount of acrylonitrile as a nitrile group-containing monomer was changed from 30 parts to 25 parts, the used amount of 1,3-butadiene as a conjugated diene monomer was changed from 60 parts to 50 parts, the used amount of methacrylic acid as an acid group-containing monomer was changed from 10 parts to 3 parts, and 22 parts of styrene as an aromatic vinyl monomer was further used.

[pH adjustment]

The water dispersion (solid content concentration: 20%) of the polymer A obtained as described above was adjusted to pH 9.5 through addition of 2.5% KOH aqueous solution. After adding 200 parts of NMP to 100 parts of the pH adjusted water dispersion of the polymer A, water and residual monomer were completely evaporated under reduced pressure, and then NMP was also evaporated until the concentration reached 10% to yield an NMP solution of the polymer A as a dispersant composition.

(Example 4)

A dispersant composition, a conductive material dispersion liquid, a slurry for a positive electrode, a positive electrode, a negative electrode, and a lithium ion secondary battery were prepared or produced in the same way as in Example 1 with the exception that in production of the dispersant composition, the pH of the dispersant composition was adjusted to 7.5 through addition of 2.5% KOH aqueous solution. Evaluations were conducted in the same manner as in Example 1. The results are shown in Table 1.

(Example 5)

A conductive material dispersion liquid, a slurry for a positive electrode, a positive electrode, a negative electrode, and a lithium ion secondary battery were prepared or produced in the same way as in Example 1 with the exception that a dispersant composition produced as described below was used. Evaluations were conducted in the same manner as in Example 1. The results are shown in Table 1.

<Production of dispersant composition>

[Synthesis of polymer A]

A water dispersion (solid content concentration: 20%) of a polymer A was obtained in the same way as in Example 1 with the exception that the used amount of acrylonitrile as a nitrile group-containing monomer was changed from 30 parts to 37 parts, the used amount of 1,3-butadiene as a conjugated diene monomer was changed from 60 parts to 62 parts, and the used amount of methacrylic acid as an acid group-containing monomer was changed from 10 parts to 1 part.

[pH adjustment]

The water dispersion (solid content concentration: 20%) of the polymer A obtained as described above was adjusted to pH 9.5 through addition of 2.5% KOH aqueous solution. After adding 200 parts of NMP to 100 parts of the pH adjusted water dispersion of the polymer A, water and residual monomer were completely evaporated under reduced pressure, and then NMP was also evaporated until the concentration reached 10% to yield an NMP solution of the polymer A as a dispersant composition.

(Comparative Example 1)

A dispersant composition, a conductive material dispersion liquid, a slurry for a positive electrode, a positive electrode, a negative electrode, and a lithium ion secondary battery were prepared or produced in the same way as in Example 1 with the exception that in production of the dispersant composition, the pH of the dispersant composition was adjusted to 12 through addition of 2.5% KOH aqueous solution. Evaluations were conducted in the same manner as in Example 1. The results are shown in Table 1.

(Comparative Example 2)

A conductive material dispersion liquid, a slurry for a positive electrode, a positive electrode, a negative electrode, and a lithium ion secondary battery were prepared or produced in the same way as in Example 1 with the exception that a dispersant composition produced as described below was used. Evaluations were conducted in the same manner as in Example 1. The results are shown in Table 1.

<Production of dispersant composition>

[Synthesis of polymer A]

A reactor was charged with 200 parts of deionized water and 0.2 parts of sodium carbonate. After dissolution of the sodium carbonate, 2.25 parts of a fatty acid potassium soap (potassium salt of a fatty acid) was added to produce a soap aqueous solution. Next, 35 parts of acrylonitrile as a nitrile group-containing monomer and 0.4 parts of tert-dodecyl mercaptan as a chain transfer agent were added, in order, to the obtained soap aqueous solution, gas inside of the reactor was purged three times with nitrogen, and then 65 parts of 1,3-butadiene as a conjugated diene monomer was added. Next, the inside of the reactor was held at 10°C while adding a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H$_2$O to initiate a polymerization reaction. At the point at which the polymerization conversion rate reached 85%, 0.1 parts of hydroquinone (polymerization inhibitor) aqueous solution of 10% in concentration was added to stop the polymerization reaction, and then residual monomer was removed using a rotary evaporator with a water temperature of 60°C to yield a latex of nitrile rubber. Next, a portion of the obtained latex was added to an aqueous solution of magnesium sulfate as a coagulant in an amount of 1.0 mass% with respect to the nitrile rubber content and was stirred therewith to coagulate the latex. The coagulated latex was subsequently filtered while being washed with water, and the resultant coagulated material was vacuum dried at a temperature of 60°C for 12 hours to yield a precursor of a polymer A.

The obtained precursor of a polymer A was dissolved in acetone such as to have a concentration of 12%, the resultant solution was loaded into an autoclave, 500 mass ppm of a palladium/silica catalyst relative to the precursor of a polymer A was added, and a hydrogenation reaction was performed at a hydrogen pressure of 3.0 MPa. Once the hydrogenation reaction had ended, the product was poured into a large amount of water to cause coagulation and was then subjected to filtration and drying to yield a polymer A.

[pH adjustment]

NMP was added to the polymer A obtained as described above until the concentration was 10% to thereby obtain an NMP solution of the polymer A as a dispersant composition.

(Comparative Example 3)

A conductive material dispersion liquid, a slurry for a positive electrode, a positive electrode, a negative electrode, and a lithium ion secondary battery were prepared or produced in the same way as in Example 1 with the exception that a dispersant composition produced as described below was used. Evaluations were conducted in the same manner as in Example 1. The results are shown in Table 1.

<Production of dispersant composition>

[Synthesis of polymer A]

A water dispersion (solid content concentration: 20%) of a polymer A was obtained in the same way as in Example 1 with the exception that the used amount of tert-dodecyl mercaptan was changed from 1.80 parts to 2.50 parts.

[pH adjustment]

The water dispersion (solid content concentration: 20%) of the polymer A obtained as described above was adjusted to pH 9.5 through addition of 2.5% KOH aqueous solution. After adding 200 parts of NMP to 100 parts of the pH adjusted water dispersion of the polymer A, water and residual monomer were completely evaporated under reduced pressure, and then NMP was also evaporated until the concentration reached 10% to yield an NMP solution of the polymer A as a dispersant composition.

(Comparative Example 4)

A conductive material dispersion liquid, a slurry for a positive electrode, a positive electrode, a negative electrode, and a lithium ion secondary battery were prepared or produced in the same way as in Example 1 with the exception that a dispersant composition produced as described below was used. Evaluations were conducted in the same manner as in Example 1. The results are shown in Table 1.

<Production of dispersant composition>

[Synthesis of polymer A]

A water dispersion (solid content concentration: 20%) of a polymer A was obtained in the same way as in Example 1 with the exception that the used amount of acrylonitrile as a nitrile group-containing monomer was changed from 30 parts to 40 parts, the used amount of 1,3-butadiene as a conjugated diene monomer was changed from 60 parts to 55 parts, the used amount of methacrylic acid as an acid group-containing monomer was changed from 10 parts to 5 parts, and the used amount of tert-dodecyl mercaptan was changed from 1.80 parts to 0.90 parts.

[pH adjustment]

The water dispersion (solid content concentration: 20%) of the polymer A obtained as described above was adjusted to pH 3.0 through addition of 2.5% $H_2SO_4$ aqueous solution. After adding 200 parts of NMP to 100 parts of the pH adjusted water dispersion of the polymer A, water and residual monomer were completely evaporated under reduced pressure, and then NMP was also evaporated until the concentration reached 10% to yield an NMP solution of the polymer A as a dispersant composition.

(Comparative Example 5)

A conductive material dispersion liquid, a slurry for a positive electrode, a positive electrode, a negative electrode, and a lithium ion secondary battery were prepared or produced in the same way as in Example 1 with the exception that a dispersant composition produced as described below was used. Evaluations were conducted in the same manner as in Example 1. The results are shown in Table 1.

<Production of dispersant composition>

[Synthesis of polymer A]

A water dispersion (solid content concentration: 20%) of a polymer A was obtained in the same way as in Example 1 with the exception that the used amount of acrylonitrile as a nitrile group-containing monomer was changed from 30 parts to 38 parts, the used amount of 1,3-butadiene as a conjugated diene monomer was changed from 60 parts to 61.5 parts, and the used amount of methacrylic acid as an acid group-containing monomer was changed from 10 parts to 0.5 parts.

[pH adjustment]

The water dispersion (solid content concentration: 20%) of the polymer A obtained as described above was adjusted to pH 3.0 through addition of 2.5% $H_2SO_4$ aqueous solution. After adding 200 parts of NMP to 100 parts of the pH adjusted water dispersion of the polymer A, water and residual monomer were completely evaporated under reduced pressure, and then NMP was also evaporated until the concentration reached 10% to yield an NMP solution of the polymer A as a dispersant composition.
In Table 1, shown below:

"AN" indicates acrylonitrile unit;
"HBD" indicates hydrogenated 1,3-butadiene unit;
"BD" indicates unit other than HBD derived from 1,3-butadiene monomer;
"ST" indicates styrene unit;
"MAA" indicates methacrylic acid unit;
"MBM" indicates monobutyl maleate unit;
"CNT" indicates carbon nanotubes; and
"NMP" indicates N-methyl-2-pyrrolidone.

Note that "$F_A$" in Table 1 is a value that has been rounded at the second decimal place, and that "T2 ratio" is a value that has been rounded at the third decimal place.

[Table 1]

| | | | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|---|---|
| Conductive material dispersion liquid | Dispersant composition | Polymer A | Nitrile group-containing monomer unit | Type | AN | AN | AN | AN | AN | AN | AN | AN | AN | AN |
| | | | | Proportional content [mass%] | 30 | 30 | 25 | 30 | 37 | 30 | 35 | 30 | 40 | 38 |
| | | | Alkylene structural unit having carbon number of 4 or more | Type | HBD | HBD | HBD | HBD | HBD | HBD | HBD | HBD | HBD | HBD |
| | | | | Proportional content [mass%] | 56 | 57 | 47 | 56 | 58 | 56 | 63 | 58 | 52 | 51.5 |
| | | | Conjugated diene monomer unit | Type | BD | BD | BD | BD | BD | BD | BD | BD | BD | BD |
| | | | | Proportional content [mass%] | 4 | 3 | 3 | 4 | 4 | 4 | 2 | 2 | 3 | 10 |
| | | | Aromatic vinyl monomer unit | Type | - | - | ST | - | - | - | - | - | - | - |
| | | | | Proportional content [mass%] | - | - | 22 | - | - | - | - | - | - | - |
| | | | Acid group-containing monomer unit | Type | MAA | MBM | MAA | MAA | MAA | MAA | - | MAA | MAA | MAA |
| | | | | Proportional content [mass%] | 10 | 10 | 3 | 10 | 1 | 10 | - | 10 | 5 | 0.5 |
| | | | Weight-average molecular weight ($M_A$) [-] | | 37,000 | 63,000 | 50,000 | 37,000 | 28,000 | 37,000 | 200,000 | 25,000 | 105,000 | 42,000 |
| | | | Viscosity ($\eta_A$) [mPa·s] | | 110 | 65 | 110 | 283 | 34 | 1780 | 3450 | 250 | 470 | 42 |
| | | | $F_A$ ($\eta_A/M_A \times 1000$) | | 3.0 | 1.0 | 2.2 | 7.6 | 1.2 | 48.1 | 17.3 | 10.0 | 4.5 | 1.0 |
| | | | $T2_C$ [ms] | | 2330 | 1955 | 2140 | 2290 | 2425 | 2320 | 2103 | 2516 | 1853 | 3142 |
| | | | $T2_S$ [ms] | | 3345 | 3345 | 3345 | 3345 | 3345 | 3345 | 3345 | 3345 | 3345 | 3345 |
| | | | T2 ratio ($T2_S/T2_C$) | | 1.44 | 1.71 | 1.56 | 1.46 | 1.38 | 1.44 | 1.59 | 1.33 | 1.81 | 1.06 |
| | | | Iodine value [mg/100 mg] | | 20 | 16 | 12 | 20 | 19 | 20 | 7 | 8 | 13 | 49 |

(continued)

| | | | | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|---|---|---|
| | | Solvent | Type | NMP | NMP | NMP | NMP | NMP | NMP | NMP | NMP | NMP | NMP |
| | Conductive material | | | CNT | CNT | CNT | CNT | CNT | CNT | CNT | CNT | CNT | CNT |
| | Proportional content of polymer A [mass%] | | | 1.2 | 1.2 | 1.2 | 1.2 | 1.2 | 1.2 | 1.2 | 1.2 | 1.2 | 1.2 |
| | Proportional content of CNTs [mass%] | | | 6 | 6 | 6 | 6 | 6 | 6 | 6 | 6 | 6 | 6 |
| | Solid content concentration [mass%] | | | 7.2 | 7.2 | 7.2 | 7.2 | 7.2 | 7.2 | 7.2 | 7.2 | 7.2 | 7.2 |
| Evaluation | Volume resistivity | | | A | A | A | B | A | c | B | B | B | B |
| | Viscosity of conductive material dispersion liquid | | | A | B | B | A | B | A | C | A | C | C |
| | IV resistance | | | A | B | A | A | A | D | D | C | C | C |
| | Rate characteristics | | | A | B | B | B | B | c | B | A | B | B |

It can be seen from Table 1 that it was possible to produce a lithium ion secondary battery having low IV resistance in Examples 1 to 5 in which the used dispersant composition contained a polymer A that included a nitrile group-containing monomer unit and an alkylene structural unit having a carbon number of 4 or more and for which $F_A$ and the T2 ratio were within specific ranges.

In contrast, it can be seen that compared to Examples 1 to 5, IV resistance of a lithium ion secondary battery increased in Comparative Examples 1 to 3 in which the used dispersant composition contained a polymer A for which $F_A$ was outside of a specific range and Comparative Examples 4 and 5 in which the used dispersant composition contained a polymer A for which the T2 ratio was outside of a specific range.

INDUSTRIAL APPLICABILITY

According to the present disclosure, it is possible to provide a dispersant composition for an electrochemical device, a conductive material dispersion liquid for an electrochemical device, and a slurry for an electrochemical device electrode with which it is possible to form an electrode for an electrochemical device that can reduce IV resistance of an electrochemical device.

Moreover, according to the present disclosure, it is possible to provide an electrode for an electrochemical device that can reduce IV resistance of an electrochemical device.

Furthermore, according to the present disclosure, it is possible to provide an electrochemical device that has low IV resistance.

**Claims**

1. A dispersant composition for an electrochemical device comprising a polymer A, wherein

   the polymer A includes a nitrile group-containing monomer unit and an alkylene structural unit having a carbon number of 4 or more,
   when a weight-average molecular weight of the polymer A is taken to be $M_A$ and a viscosity measured at a temperature of 25°C for a polymer solution obtained by adding N-methyl-2-pyrrolidone to the polymer A such that a concentration of the polymer A is 10 mass% is taken to be $\eta_A$, in units of mPa·s, a value $F_A$ calculated by formula (1), shown below:

   $$F_A = (\eta_A/M_A) \times 1,000 \cdots (1)$$

   is not less than 0.1 and not more than 9.0, and
   when a transverse relaxation time measured at a temperature of 25°C for N-methyl-2-pyrrolidone is taken to be $T2_S$, in units of milliseconds, and a transverse relaxation time measured at a temperature of 25°C for a polymer solution obtained by adding N-methyl-2-pyrrolidone to the polymer A such that a concentration of the polymer A is 1 mass% is taken to be T2c, in units of milliseconds, a T2 ratio calculated by formula (2), shown below:

   $$T2 \text{ ratio} = T2_S/T2_C \cdots (2)$$

   is not less than 1.1 and not more than 1.8.

2. The dispersant composition for an electrochemical device according to claim 1, wherein

   the nitrile group-containing monomer unit is an acrylonitrile unit, and
   the alkylene structural unit is a hydrogenated 1,3-butadiene unit.

3. The dispersant composition for an electrochemical device according to claim 1 or 2, wherein the polymer A further includes either or both of an aromatic vinyl monomer unit and an acid group-containing monomer unit.

4. The dispersant composition for an electrochemical device according to any one of claims 1 to 3, wherein

   the polymer A has an iodine value of not less than 5 mg/100 mg and not more than 60 mg/100 mg, and
   the polymer A has a weight-average molecular weight ($M_A$) of not less than 1,000 and not more than 100,000.

5. The dispersant composition for an electrochemical device according to any one of claims 1 to 4, further comprising a solvent.

6. A conductive material dispersion liquid for an electrochemical device comprising: the dispersant composition for an electrochemical device according to any one of claims 1 to 5; a conductive material; and a solvent, wherein the conductive material includes one or more carbon nanotubes.

7. The conductive material dispersion liquid for an electrochemical device according to claim 6, wherein the conductive material dispersion liquid for an electrochemical device had a solid content concentration of not less than 0.1 mass% and not more than 15 mass%.

8. The conductive material dispersion liquid for an electrochemical device according to claim 6 or 7, wherein

   proportional content of the carbon nanotubes is not less than 0.05 mass% and not more than 10 mass%, and
   proportional content of the polymer A is not less than 0.02 mass% and not more than 8 mass%.

9. A slurry for an electrochemical device electrode comprising: the conductive material dispersion liquid for an electrochemical device according to any one of claims 6 to 8; and an electrode active material.

10. An electrode for an electrochemical device comprising an electrode mixed material layer formed using the slurry for an electrochemical device electrode according to claim 9.

11. An electrochemical device comprising the electrode for an electrochemical device according to claim 10.

## INTERNATIONAL SEARCH REPORT

| International application No. |
| --- |
| **PCT/JP2024/030318** |

**A. CLASSIFICATION OF SUBJECT MATTER**

*H01M 4/139*(2010.01)i; *H01G 11/38*(2013.01)i; *H01M 4/13*(2010.01)i; *H01M 4/62*(2006.01)i
FI:  H01M4/139; H01G11/38; H01M4/13; H01M4/62 Z

According to International Patent Classification (IPC) or to both national classification and IPC

**B. FIELDS SEARCHED**

Minimum documentation searched (classification system followed by classification symbols)

H01M4/139; H01G11/38; H01M4/13; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/241384 A1 (ZEON CORPORATION) 03 December 2020 (2020-12-03)<br>entire text, all drawings | 1-11 |
| A | WO 2020/241383 A1 (ZEON CORPORATION) 03 December 2020 (2020-12-03)<br>entire text, all drawings | 1-11 |
| A | JP 2023-103643 A (TOYOTA JIDOSHA KABUSHIKI KAISHA) 27 July 2023 (2023-07-27)<br>entire text, all drawings | 1-11 |
| A | JP 2023-103641 A (TOYOTA JIDOSHA KABUSHIKI KAISHA) 27 July 2023 (2023-07-27)<br>entire text, all drawings | 1-11 |
| A | JP 2018-125094 A (KURARAY CO., LTD.) 09 August 2018 (2018-08-09)<br>entire text, all drawings | 1-11 |
| A | JP 2002-179865 A (BASF AG) 26 June 2002 (2002-06-26)<br>entire text, all drawings | 1-11 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 November 2024** | **19 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/030318**

| Patent document cited in search report | | | Publication date (day/month/year) | Patent family member(s) | | | Publication date (day/month/year) |
|---|---|---|---|---|---|---|---|
| WO | 2020/241384 | A1 | 03 December 2020 | US 2022/0231297 A1 entire text, all drawings EP 3978444 A1 | | | |
| WO | 2020/241383 | A1 | 03 December 2020 | US 2022/0190341 A1 entire text, all drawings EP 3981804 A1 | | | |
| JP | 2023-103643 | A | 27 July 2023 | (Family: none) | | | |
| JP | 2023-103641 | A | 27 July 2023 | (Family: none) | | | |
| JP | 2018-125094 | A | 09 August 2018 | (Family: none) | | | |
| JP | 2002-179865 | A | 26 June 2002 | US 2002/0137830 A1 entire text, all drawings EP 1201691 A1 | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022070736 A1
- JP 2018533175 A
- WO 2012165120 A1
- WO 2013080989 A1
- JP 2013008485 A
- WO 2012115096 A1
- JP 2012204303 A